# EUROPÄISCHE PATENTSCHRIFT

(11) **EP 2 159 435 B1**
(45) Veröffentlichungstag und Bekanntmachung des Hinweises auf die Patenterteilung: **20.03.2013**
(21) Anmeldenummer: 09167914.2
(22) Anmeldetag: 14.08.2009
(51) Int. Cl.: F16C 17/02, F16C 3/02, F16C 31/02, F16L 55/172, F16C 33/08, F16C 35/02

(54) **Verfahren zur Ummantelung zylindrischer Körper und Distanzschelle zur Aufnahme zweier Rohrhälften**
Method for cladding cylindrical bodies and distancing clamp for holding two bushing halves
Procédé de gainage de corps cylindriques et bride d'écartement pour la réception de deux moitiés de manchon

(30) Priorität: 30.08.2008 DE 102008045204
(43) Veröffentlichungstag der Anmeldung: 03.03.2010
(73) Patentinhaber: Krauss-Maffei Wegmann GmbH & Co. KG, 80997 München (DE)
(72) Erfinder: Schuhmann, Manfred, 85276 Pfaffenhofen (DE); Stoiber, Wolfgang, 84036 Landshut (DE)
(74) Vertreter: Feder Walter Ebert

(56) Entgegenhaltungen:
- DE-B3- 10 244 533
- DE-C1- 3 936 588
- US-A- 5 651 738

## Beschreibung

Die Erfindung betrifft ein Verfahren zur Ummantelung zylindrischer Körper mit den Schritten
- Teilen eines Mantelrohres in zwei Rohrhätften,
- Anordnen der beiden Rohrhälften auf dem zylindrischen Körper und
- Festlegen der Rohrhälften auf dem zylindrischen Körper.

Einen weiteren Gegenstand der Anmeldung bildet eine Distanzschelle zum Halten zweier Rohrhälften.

Aus der DE 3936588 C1 ist eine lösbare Rohrverbindung für ein Doppelrohrsystem bekannt, bei welcher die Enden der Rohre axial auf Distanz gehalten und mittels geeigneter Halbschalen miteinander verbunden werden.

In vielen Gebieten der Technik ist es erforderlich, zylindrische Körper, etwa Rohre, abschnittsweise zu ummanteln, beispielsweise in Bereichen erhöhter Reibung. In Fällen, in denen es nicht möglich ist, ein Mantelrohr über den zylindrischen Körper hinüberzuschieben, wird das Mantelrohr in zwei Hälften zerteilt, wonach die Rohrhälften aus radialer Richtung auf dem Mantel des zylindrischen Körpers angeordnet und anschließend festgelegt werden.

Als problematisch bei diesem Verfahren zur Anordnung von Rohrhälften hat sich die beim Teilen des Rohres, etwa durch Zersägen, ergebende Schnittfuge erwiesen. Es ist nicht möglich, die beiden Rohrhälften gegeneinander anliegend auf dem zylindrischen Körper anzuordnen, da aufgrund des fehlenden Materials im Bereich der Schnittfuge die Form der aneinander anliegenden Rohrhälften nicht mehr rundzylindrisch wäre.

Aufgabe der Erfindung ist es, ein Verfahren und eine Distanzschelle bereitzustellen, mit welchen sich Rohrhälften auf einfache Weise auf dem zylindrischen Körper zu einer zylindrischen Ummantelung zusammensetzen lassen.

Zur Lösung wird bei einem Verfahren der eingangs genannten Art vorgeschlagen, dass der Abstand der beiden Rohrhälften auf dem zylindrischen Körper über zwei Distanzhalter eingestellt wird.

Die Verwendung von Distanzhaltern erlaubt auf einfache Weise ein definiertes Ausrichten der beiden Rohrhälften auf dem zylindrischen Körper. Die ursprüngliche Form des zylindrischen Rohres lässt sich auf einfache Weise wieder herstellen.

In einer Ausgestaltung wird vorgeschlagen, dass das Mantelrohr unter Bildung einer Schnittfuge geteilt wird und der Abstand der beiden Rohrhälften der Breite der Schnittfuge entspricht. Hierdurch wird erreicht, dass die beiden Rohrhälften unabhängig von der Breite der Schnittfuge in einer rotationssymmetrischen Anordnung zueinander ausgerichtet sind.

Weiter wird vorgeschlagen, dass die Breite des Distanzhalters größer als die Breite der Schnittfuge ist, wodurch sich eine genaue Einstellung des Abstandes, die von Unregelmäßigkeiten in der Schnittfugenbreite unabhängig ist, erreichen lässt.

Weiter wird vorgeschlagen, dass das Mantelrohr vor dem Zerteilen in zwei Rohrhälften mit Aufnahmen zur Aufnahme der Distanzhalter versehen wird. In diesem Zusammenhang ist es von Vorteil, wenn die beim Teilen des Mantelrohres entstehende Schnittfuge durch die Aufnahmen verläuft.

Weiter wird vorgeschlagen, dass jeweils zwei Aufnahmen gegenüberliegend auf den Mantel des Mantelrohres vorgesehen werden. Die gegenüberliegende Anordnung erlaubt das Einbringen zweier Aufnahmen in nur einem Arbeitsschritt, beispielsweise mittels eines Bohrers oder Fräsers.

Für eine präzise Ausrichtung und Positionierung der Rohrhälften ist es von Vorteil, wenn die Aufnahmen in den Endbereichen des Mantelrohres vorgesehen sind.

Weiter wird vorgeschlagen, dass die Enden des Mantelrohres mittels Distanzschellen zusammengehalten werden. Die Verwendung von Distanzschellen zum Zusammenhalten der Mantelrohrhälften ermöglicht, im Gegensatz zu etwa einer Verschweißung, eine einfache Demontage der Mantelrohrhälften etwa bei Erreichen deren Verschleißgrenze. Es ist lediglich erforderlich, die Distanzschellen zu lösen, die Rohrhälften zu entfernen und gegen neue zu ersetzen.

Vorteilhaft sind die Distanzschellen im Bereich der Aufnahmen angeordnet und weisen eine korrespondierende Aufnahme zur Aufnahme des Distanzhalters auf.

Darüberhinaus wird zur **Lösung** der vorstehenden Aufgabe in Bezug auf die Distanzschelle vorgeschlagen, dass diese zwei Schellenhälften aufweist, die jeweils einen zwischen den Rohrhälften positionierbaren Distanzhalter aufweisen.

Über einen solchen Distanzhalter lässt sich der Abstand zwischen den beiden Rohrhälften auf einfache Weise so einstellen, dass die ursprüngliche Zylinderform erhalten bleibt.

Schließlich wird in Bezug auf die Distanzschelle weiter vorgeschlagen, dass die Schellenhälften über eine Tangentialverschraubung gegeneinander festlegbar sind, wodurch sich eine zuverlässige Festlegung ergibt.

Weitere Einzelheiten und Vorteile der Erfindung werden nachfolgend unter Zuhilfenahme der beigefügten Zeichnungen eines Ausführungsbeispiels beschrieben. Darin zeigen:
- Fig. 1:: eine Schnittansicht eines Fahrzeuglenkungsdurchbruchs,
- Fig. 2:: zwei Rohrhälften in perspektivischer Ansicht,
- Fig. 3:: zwei mit Distanzschellen versehene Rohrhälften in perspektivischer Darstellung, wobei aus Gründen der Übersicht nicht alle Elemente der Distanzschellen dargestellt sind,
- Fig. 4:: eine der Fig. 3 entsprechende Ansicht, bei der alle Elemente der Dis- tanzschellen dargestellt sind,
- Fig. 5:: eine Stirnansicht gemäß der in Fig. 4 mit V bezeichneten Richtung und
- Fig. 6:: eine Schnittansicht durch die Mittelebene einer Distanzschelle.

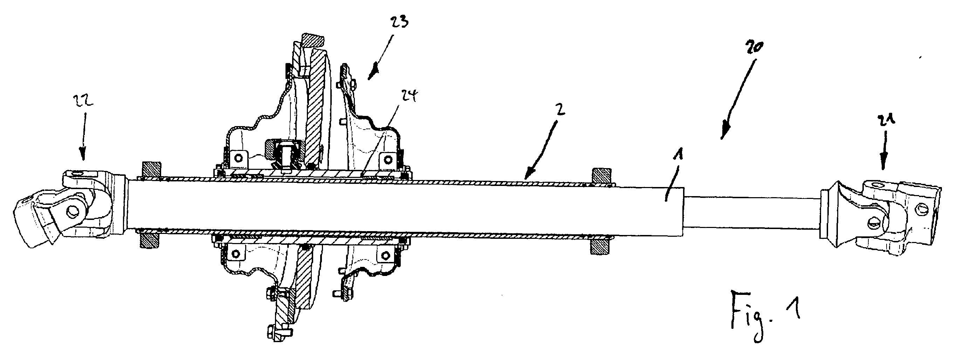

Fig. 1 zeigt beispielhaft eine mögliche Anwendung des erfindungsgemäßen Verfahrens und der zugehörigen Distanzschellen anhand einer Lenkvorrichtung für Fahrzeuge. Dargestellt ist eine Lenkspindel 20, die im Bereich ihres einen Endes einen Anschluss 21 für das Lenkrad des Fahrzeuges und auf der anderen Seite einen Anschluss 22 für das Lenkgetriebe des Fahrzeugs aufweist. Die Lenkspindel 20 ist von insgesamt länglicher Rohrform und im Bereich des Fahrzeugbodens durch eine Bodendurchführung 23 aus dem Fahrzeuginneren nach außen hi-nausgeführt. Im Bereich der Bodendurchführung 23 ist eine Führungshülse 24 vorgesehen, innerhalb welcher ein zylindrischer Körper 1 der Lenkspindel 20 bei Bewegungen der Fahrzeugkabine hin- und hergleitet. Da dieses Hin- und Hergleiten zu einer erhöhten Reibung und dem damit verbundenen Verschleiß am Umfang des Körpers 1 führt, ist der zylindrische Körper 1 abschnittsweise mit einem Mantelrohr 2 ummantelt.

Da die Anschlüsse 21, 22 einen größeren Durchmesser als das Mantelrohr 2 bzw. der zu ummantelnde Bereich des Körpers 1 aufweisen, ist es nicht möglich, das Mantelrohr 2 in axialer Richtung auf den zylindrischen Körper 1 hinaufzuschieben. Vielmehr ist es erforderlich, das Mantelrohr 2 zunächst in zwei Hälften zu teilen und anschließend die Rohrhälften aus radialer Richtung auf dem Umfang des zylindrischen Körpers 1 festzulegen.

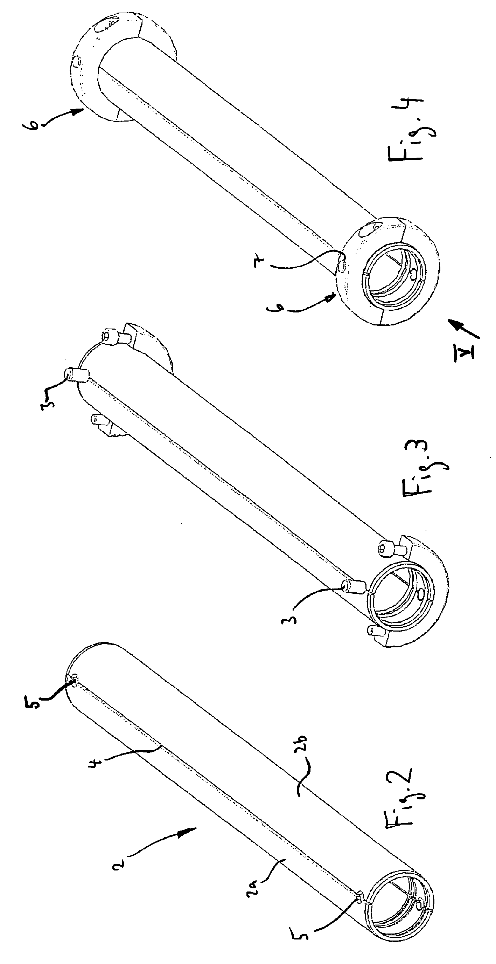

Einzelheiten des Verfahrens zur Ummantelung des zylindrischen Körpers 1 werden nachfolgend unter Zuhilfenahme der Figuren 2 bis 6 beschrieben. Fig. 2 zeigt in perspektivischer Darstellung das in zwei Rohrhälften 2a, 2b zersägte Mantelrohr 2. Beim Zersägen des Mantelrohres 2 entsteht eine sich in Axialrichtung des Rohres 2 erstreckende Schnittfuge 4, deren Breite in Abhängigkeit von der Breite des verwendeten Sägeblatts einige Millimeter stark sein kann. Im Bereich der Enden des Mantelrohres 2 sind beim Ausführungsbeispiel nach Art radialer Durchgangsbohrungen gestaltete Aufnahmen 5 zur Aufnahme eines in Fig. 3 dargestellten Distanzhalters 3 vorgesehen. Die Aufnahmen 5 weisen eine Breite auf, die breiter ist als die Breite der Schnittfuge 4.

In Fig. 3 dargestellt sind einige Elemente von auf den Enden des Mantelrohres 2 angebrachten Distanzschellen 6, die die beiden Rohrhälften 2a, 2b unter Beibehaltung der Schnittfuge 4 fest zusammenhalten. Wesentliches Element dieser Distanzschellen 6 ist der Distanzhalter 3, der in einer als radiale Durchgangsbohrung gestalteten Aufnahme 7 des Distanzhalters 6 festgelegt ist. Die Aufnahme 7 des Distanzhalters 6 ist korrespondierend zu der Aufnahme 5 des Mantelrohres 2 in radialer Fluchtung angeordnet.

Bei der Herstellung der in Fig. 1 dargestellten Ummantelung des zylindrischen Körpers 1 werden zunächst die Ausnehmungen bzw. Aufnahmen 5 in das Rohr 2 eingebracht. Danach wird das Rohr 2 entlang der Schnittfuge 4 so in zwei Hälften zerteilt, dass die Aufnahmen 5 in etwa mittig zertrennt werden. Da die Aufnahmen 5 breiter als die Schnittfuge 4 sind, können sie im Anschluss an das Zerschneiden als Ausrichthilfen dienen, um die Rohrhälften 2a, 2b so zueinander auszurichten, dass die ursprüngliche Kontur des Mantelrohres 2, das heißt dessen zylindrische Kontur erhalten bleibt. Hierzu werden die Distanzhalter 3, deren Größe exakt an die Größe der Aufnahmen 5 angepasst ist, in die Aufnahmen 5 eingeführt und die Rohrhälften 2a, 2b über die Distanzschellen 6 gegeneinander bzw. gegen die Distanzhalter 3 verspannt. Nach der Montage der Distanzschellen 6 bilden diese gemeinsam mit den Rohrhälften 2a, 2b eine feste Einheit. Die Rohrhälften 2a, 2b liegen im Bereich ihrer Schnittflächen seitlich gegen die radialen Distanzhalter 3 an.

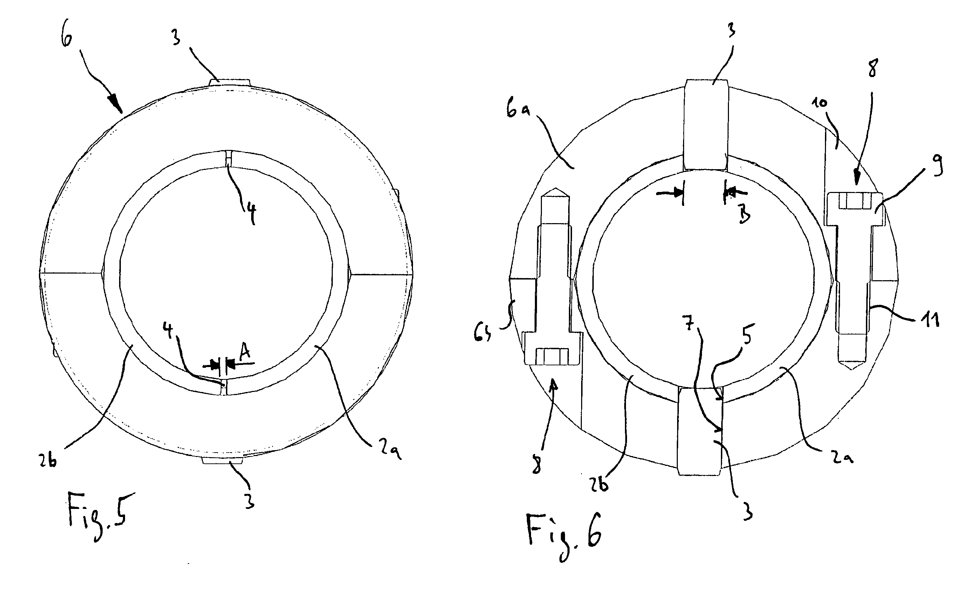

Wie sich der Darstellung in Fig. 5 entnehmen lässt, weisen die beiden Rohrhälften 2a, 2b im montierten Zustand innerhalb der Distanzschelle 6 einen Abstand A auf, der der Breite der Schnittfuge 4 entspricht. Hierdurch wird die ursprüngliche Kontur des Mantelrohres 2 auch nach dem Zersägen in zwei Hälften 2a, 2b beibehalten.

Als Distanzhalter 3 dienen beim Ausführungsbeispiel Bolzen definierten Durchmessers, vgl. Fig. 6. Die Breite B bzw. der Durchmesser der Distanzhalter 3 ist an die Öffnungsweite der Aufnahme 5 des Mantelrohres 2 sowie der Aufnahme 7 an der Distanzschelle 20 angepasst, dass diese weitgehend spielfrei in den Aufnahmen 5, 7 sitzen.

Die Distanzschelle 6 besteht im Wesentlichen aus einer oberen Hälfte 6a und einer unteren Hälfte 6b, die über Tangentialverschraubungen 8 gegeneinander verspannt sind. Die in Fig. 6 rechte Tangentialverschraubung 8 wird gebildet von einer Schraube 9, die sich mit ihrem Schraubenkopf in einer Einsenkung 10 der Hälfte 6a der Distanzschelle 6 befindet und einem Gewindesackloch 11, das gegenüberliegend in der anderen Hälfte 6b angeordnet ist. Beim Ausführungsbeispiel ist auf beiden Seiten des Mantelrohres 2 jeweils eine solche Tangentialverschraubung 8 in entgegengesetzter Ausrichtung vorgesehen. Die Tangentialverschraubungen 8 müssen nicht entgegengesetzt ausgerichtet sein. Auch können an den Distanzschellenhälften 6a, 6b sich in radialer Richtung vom Zentrum des Montagerohres 2 weg erstreckende Flanschflächen vorgesehen sein, durch die entsprechende Schrauben hindurch geführt werden können.

Das vorstehend beschriebene Verfahren zur Ummantelung zylindrischer Körper bzw. die zugehörige Distanzschelle erlauben auf einfache Weise das Anbringen von Rohrhälften auf zylindrischen Körpern, wobei die ursprüngliche Zylinderform des Rohres mit hoher Präzision erhalten bleibt.

### Bezugszeichenliste:

- 1: zylindrischer Körper
- 2: Mantelrohr
- 2a: Mantelrohrhälfte
- 2b: Mantelrohrhälfte
- 3: Distanzhalter
- 4: Schnittfuge
- 5: Aufnahme
- 6: Distanzschelle
- 6a: Hälfte
- 6b: Hälfte
- 7: Aufnahme
- 8: Tangentialverschraubung
- 9: Schraube, Schraubbolzen
- 10: Senkung
- 11: Gewindebohrung

- 20: Lenkspindel
- 21: Anschluss
- 22: Anschluss
- 23: Bodendurchführung
- 24: Führungshülse

- A: Abstand
- B: Breite

## Patentansprüche

1. Verfahren zur Ummantelung zylindrischer Körper (1) mit den Schritten
- Axiales Teilen eines Mantelrohres (2) in zwei Rohrhälften (2a, 2b),
- Anordnen der beiden Rohrhälften auf dem zylindrischen Körper (1),
- Festlegen der Rohrhälften (2a, 2b) auf dem zylindrischen Körper (1), wobei der Abstand (A) der beiden Rohrhälften (2a, 2b) auf dem zylindrischen Körper (1) über zwei Distanzhalter (3) eingestellt wird,
**dadurch gekennzeichnet,**
**dass** das Mantelrohr (2) vor dem Zerteilen in zwei Rohrhälften (2a, 2b) mit Aufnahmen (5) zur Aufnahme der Distanzhalter (3) versehen wird.

2. Verfahren nach Anspruch 1, **dadurch gekennzeichnet, dass** das Mantelrohr (2) unter Bildung einer Schnittfuge (4) geteilt wird und der Abstand (A) der Breite der Schnittfuge (4) entspricht.

3. Verfahren nach einem der vorhergehenden Ansprüche, **dadurch gekennzeichnet, dass** die Breite (B) des Distanzhalters (3) grösser als die Breite der Schnittfuge (4) ist.

4. Verfahren nach einem der vorhergehenden Ansprüche, **dadurch gekennzeichnet, dass** die beim Teilen des Mantelrohres (2) entstehende Schnittfuge (4) durch die Aufnahmen (5) verläuft.

5. Verfahren nach einem der vorhergehenden Ansprüche, **dadurch gekennzeichnet; dass** jeweils zwei Aufnahmen (5) gegenüberliegend auf dem Mantel des Mantelrohres (2) vorgesehen werden.

6. Verfahren nach einem der vorhergehenden Ansprüche, **dadurch gekennzeichnet, dass** die Aufnahmen (5) in den Endbereichen des Mantelrohres (2) vorgesehen sind.

7. Verfahren nach einem der vorhergehenden Ansprüche, **dadurch gekennzeichnet, dass** die Enden des Mantelrohres (2) mittels Distanzschellen (6) zusammengehalten werden.

8. Verfahren nach Anspruch 7, **dadurch gekennzeichnet, dass** die Distanzschellen im Bereich der Aufnahmen (5) angeordnet sind und eine korrespondierende Aufnahme (7) zur Aufnahme des Distanzhalters (3) aufweisen.

9. Kombination aus einer Distanzschelle und zwei Rohrhälften , wobei die Distanzschelle (6) zum Halten der beiden Rohrhälften (2a,2b) ausgebildet ist und zwei Schellenhälften (6a,6b) umfasst die jeweils einen in Aufnahmen zwischen den Rohrhälften (2a, 2b) positionierbaren Distanzhalter (3) aufweisen.

10. Distanzschelle nach Anspruch 9, **dadurch gekennzeichnet, dass** die Schellenhälften (6a, 6b) über eine Tangentialverschraubung (8) gegeneinander festlegbar sind.

## Claims

1. A process for sheathing cylindrical bodies (1) having the steps
- axially dividing a casing tube (2) into two tube halves (2a, 2b),
- arranging the two tube halves on the cylindrical body (1),
- fixing the tube halves (2a, 2b) on the cylindrical body (1),
wherein the spacing (A) between the two tube halves (2a, 2b) on the cylindrical body (1) is adjusted by way of two spacers (3),
**characterised in that**,
before being split into two tube halves (2a, 2b), the casing tube (2) is provided with receiving means (5) for receiving the spacers (3).

2. A process according to Claim 1, **characterised in that** the casing tube (2) is divided with the formation of a kerf (4) and the spacing (A) corresponds to the width of the kerf (4).

3. A process according to one of the preceding claims, **characterised in that** the width (B) of the spacer (3) is greater than the width of the kerf (4).

4. A process according to one of the preceding claims, **characterised in that** the kerf (4) produced when dividing the casing tube (2) extends through the receiving means (5).

5. A process according to one of the preceding claims, **characterised in that** two receiving means (5) are provided in each case opposite one another on the curved surface of the casing tube (2).

6. A process according to one of the preceding claims, **characterised in that** the receiving means (5) are provided in the end regions of the casing tube (2).

7. A process according to one of the preceding claims, **characterised in that** the ends of the casing tube (2) are held together by means of spacer clamps (6).

8. A process according to Claim 7, **characterised in that** the spacer clamps are arranged in the region of the receiving means (5) and have a corresponding receiving means (7) for receiving the spacer (3).

9. A combination of a spacer clamp and two tube halves, wherein the spacer clamp (6) is constructed to hold the two tube halves (2a, 2b) and comprises two clamp halves (6a, 6b), each of which comprises a spacer (3), which is positionable in receiving means between the tube halves (2a, 2b).

10. A spacer clamp according to Claim 9, **characterised in that** the clamp halves (6a, 6b) can be fixed against one another by way of a tangential screw connection (8).

## Revendications

1. Procédé de gainage de corps cylindriques (1) comportant les étapes suivantes consistant à :
- séparer axialement un manchon de gainage (2) en deux moitiés de manchon (2a, 2b),
- agencer les deux moitiés de manchon sur le corps cylindrique (1),
- fixer les moitiés de manchon (2a, 2b) sur le corps cylindrique (1), la distance (A) entre les deux moitiés de manchon (2a, 2b) sur le corps cylindrique (1) étant réglée par le biais de deux éléments d'écartement (3),
**caractérisé en ce que** le manchon de gainage (2) est pourvu, avant la séparation en deux moitiés de manchon (2a, 2b), de logements (5) pour la réception des éléments d'écartement (3).

2. Procédé selon la revendication 1, **caractérisé en ce que** le manchon de gainage (2) est séparé en formant une saignée (4) et la distance (A) correspond à la largeur de la saignée (4).

3. Procédé selon l'une quelconque des revendications précédentes, **caractérisé en ce que** la largeur (B) de l'élément d'écartement (3) est supérieure à la largeur de la saignée (4).

4. Procédé selon l'une quelconque des revendications précédentes, **caractérisé en ce que** la saignée (4) apparue lors de la séparation du manchon de gainage (2) traverse les logements (5).

5. Procédé selon l'une quelconque des revendications précédentes, **caractérisé en ce que** respectivement deux logements (5) sont prévus l'un en face de l'autre, sur le gainage du manchon de gainage (2).

6. Procédé selon l'une quelconque des revendications précédentes, **caractérisé en ce que** les logements (5) sont prévus dans les zones d'extrémité du manchon de gainage (2).

7. Procédé selon l'une quelconque des revendications précédentes, **caractérisé en ce que** les extrémités du manchon de gainage (2) sont maintenues ensemble par des brides d'écartement (6).

8. Procédé selon la revendication 7, **caractérisé en ce que** les brides d'écartement sont disposées dans la zone des logements (5) et présentent un logement correspondant (7) pour la réception de l'élément d'écartement (3).

9. Combinaison d'une bride d'écartement et de deux moitiés de manchon, dans laquelle la bride d'écartement (6) est réalisée pour assurer le maintien des deux moitiés de manchon (2a, 2b) et comporte deux moitiés de bride (6a, 6b) qui présentent chacune un élément d'écartement (3) positionnable dans des logements entre les moitiés de manchon (2a, 2b).

10. Bride d'écartement selon la revendication 9, **caractérisée en ce que** les moitiés de bride (6a, 6b) peuvent être fixées l'une contre l'autre par un vissage tangentiel (8).
